**Europäisches Patentamt**

**European Patent Office**

**Office européen des brevets**

(19)

(11) Publication number : **0 311 286 B1**

(12) # EUROPEAN PATENT SPECIFICATION

(45) Date of publication of patent specification :
04.03.92 Bulletin 92/10

(51) Int. Cl.⁵ : **B60K 15/00**

(21) Application number : **88308941.9**

(22) Date of filing : **27.09.88**

(54) **Vapor vent valve apparatus.**

(30) Priority : **09.10.87 US 106207**

(43) Date of publication of application :
**12.04.89 Bulletin 89/15**

(45) Publication of the grant of the patent :
**04.03.92 Bulletin 92/10**

(84) Designated Contracting States :
**DE ES FR GB IT**

(56) References cited :
**EP-A- 0 240 303**
**DE-A- 2 743 490**
**PATENT ABSTRACTS OF JAPAN, vol.10, no.
326 (M-532)(2382), November 6, 1986**

(73) Proprietor : **BORG-WARNER AUTOMOTIVE
ELECTRONIC & MECHANICAL SYSTEMS
CORPORATION
6700 18 1/2 Mile Road P.O.Box 8022
Sterling Heights, Michigan 48311-8022 (US)**

(72) Inventor : **Aubel, John Anton
214 N. Summit
Decatur Illinois 62522 (US)**

(74) Representative : **Allden, Thomas Stanley et al
A.A. THORNTON & CO. Northumberland
House 303-306 High Holborn
London WC1V 7LE (GB)**

## Description

This invention relates to a valve apparatus for controlling the flow of vapour from a container.

Systems for permitting vapours to be exhausted from a container, including a fuel tank of a vehicle, are known in the art. Such systems may be satisfactory for their intended purpose under circumstances where escaping vapours are directed out of the inlet port or filler neck directly into the atmosphere during a refilling sequence or process. Evaporative loss of hydrocarbons from motor fuel tanks, however, contribute significantly to the unburned hydrocarbons emitted to the atmosphere. As such, it would be beneficial to provide means which controls vapour escapement from a container only after certain conditions have been satisfied.

In accordance with the invention as claimed there is provided a valve apparatus for controlling the flow of vapour from a container having a closable liquid inlet, the valve apparatus comprising a housing having a passage one end of which opens to a liquid receiving chamber provided in the container and another end which opens to outside the container, solenoid actuable valve means situated in cooperative relationship to the passage and effective to regulate vapour flow between the chamber and outside of the container, and operative means for controlling the opening and closing of the valve means as a function of each of the following criteria: liquid level in the chamber and whether an operator actuated switch is open.

Advantageously, said another end of the housing is connectable to a vapour absorbing canister by which an on-board means of recovering vapour from the container during a filling process is provided.

In one preferred embodiment the operative means comprising electrically energizable circuit means which responds to: first operative means including the operator actuated switch having at least two positions; second operative means for monitoring the liquid level in the chamber; third operative means for monitoring whether the inlet to the container is open; and, fourth operative means including resettable timer means for monitoring how long the inlet is or has been open. When the circuit means is completed and closed, the solenoid means is controlled to open the valve means for a predetermined period of time extending from the opening of the container's inlet. The circuit will be completed only when the switch is moved by the operator to the open one of its two positions and after the second operative means senses the liquid level in the chamber has attained a predetermined level.

An alternative embodiment of the present invention would include a second electrically energizable circuit which would open the valve means for a different period of time than the first circuitry means, by which the circuit may be completed when the switch is moved by the operator to its open position and when the liquid level in the chamber has attained the predetermined level as sensed by the second operative means but independently of opening of the container's liquid inlet. Thereby, pressure in the chamber may be relieved prior to the liquid inlet of the container being opened.

In order that the invention may be well understood the two aforementioned embodiments thereof, which are given by way of example, will now be described with reference to the accompanying drawings, in which:

Figure 1 is a side elevational view schematically illustrating the general arrangement of a vehicle fuel system incorporating a valve apparatus embodying the invention;

Figure 2 is an enlarged corss-sectional view of the same valve apparatus arranged in combination with a container of the vehicle fuel system;

Figure 3 is an electrical schematic of a basic electrical circuit of the valve apparatus of Figure 2; and

Figure 4 illustrates an alternative electrical circuit of the valve apparatus of Figure 2.

In the drawings, like reference numerals indicate like parts throughout the several views.

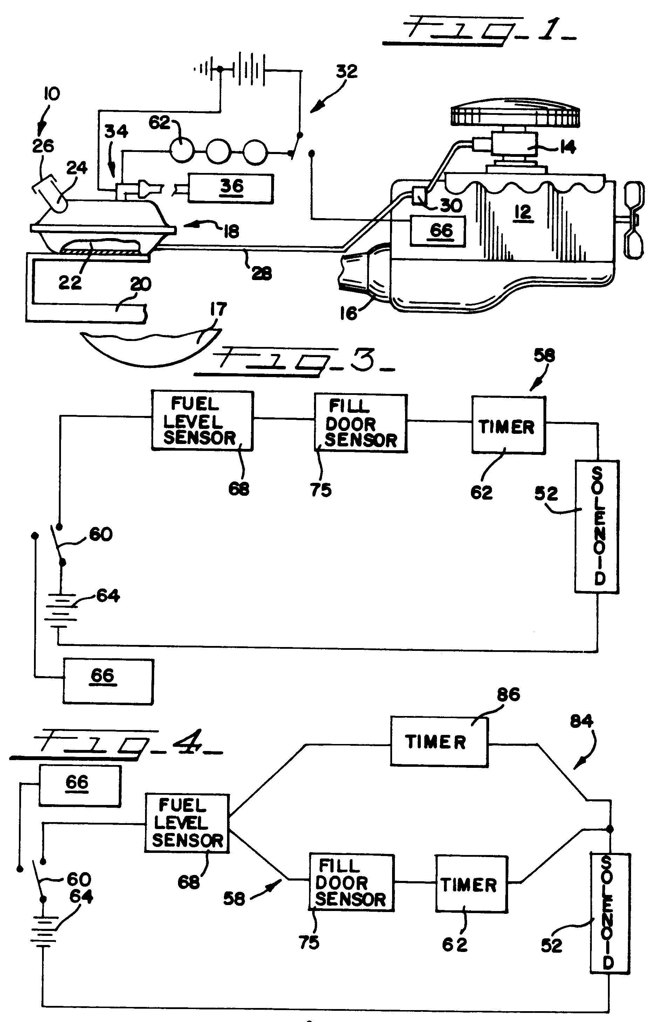

Referring first to Figure 1, a vehicle 10 includes an engine 12 with a fuel metering device 14. For purposes of discussion, the device 14 may be considered to be a carburettor. A power transmission 16, connectable to the engine 12, provides power to the vehicle's ground engaging wheels 17 and conditions the vehicle for forward and reverse movements.

A container or fuel tank assembly 18 is mounted to the vehicle frame 20 in a position usually remote from the engine. The container 18 includes a fluid receiving chamber 22 in which fuel vapours generated during vehicle operation may collect. A closable inlet port or pipe 24 leads from the chamber 22. Any suitable means or combination of means, i.e., fill door or air tight fuel cap 26 may be used to close the inlet port 24. The tank or container 18 has a fuel supply conduit means 28 leading therefrom to the inlet or intake of a related fuel pump assembly 30. The fuel pump assembly 30 may be of any type (many of which are well known in the art) and may be driven electrically or mechanically as by a direct mechanical connection with the engine 12.

An evaporative control system 32 is arranged in combination with the fuel tank or container 18 for evacuating vapors therefrom. As seen in Figure 1, the system 32 includes a valve assembly 34 carried by the tank 18. One end of the valve assembly 34 is connected to a conventional vapour cannister 36 carried by the vehicle. As is known, the cannister 36 includes active vapour absorbing materials such as activated charcoal or carbon.

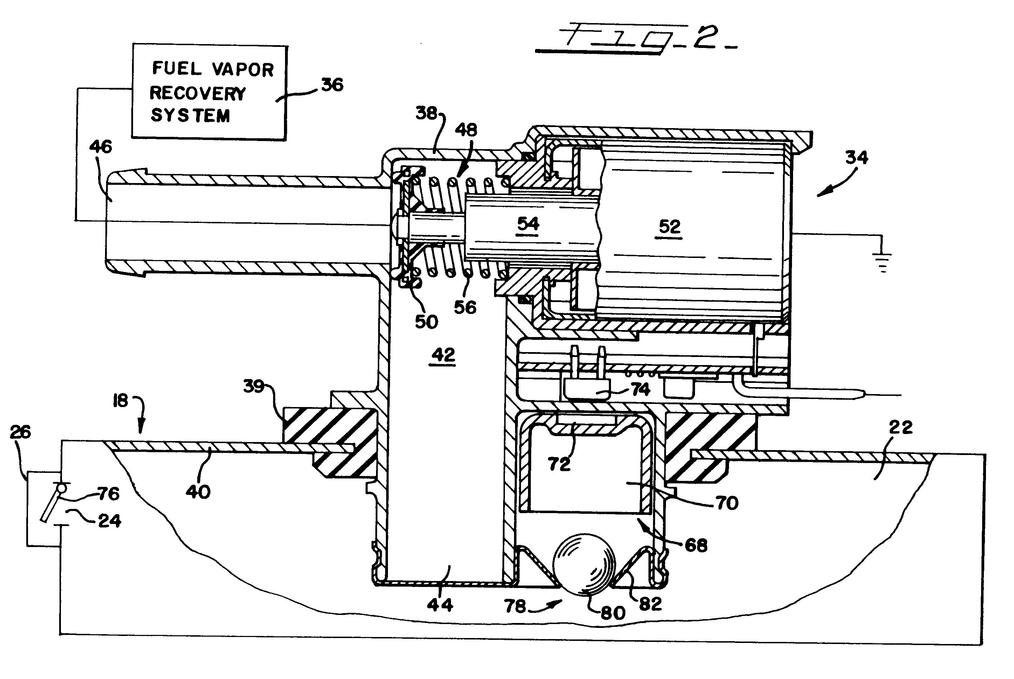

Turning now to Figure 2, the valve assembly 34 includes a housing 38 which is securely mounted by a grommet 39 in a top wall portion 40 of the container 18. The housing 38 includes a passage 42 having one end 44 which opens to the chamber 22 and another end 46 which opens at a location outside the container 18. In the illustrated embodiment, the end 46 of housing 38 is in fluid communication with the vapour cannister 36. A solenoid actuatable valve means 48 is situated in a cooperative relationship to the passage 42 and is effective to regulate vapour flow from the container 18. The valve means 48 includes a valve member 50 and a solenoid actuator 52. The valve member 50 is arranged to regulate vapour flow through the passage 42 between the chamber 22 and outside of the container 18. The solenoid actuator 52 is carried by the housing 38 and includes a linearly movable stem 54 the free end of which is operably connected to the valve member 50 to control disposition of same. The disposition of the valve member 50 is also influenced by biasing means 56. In its presently preferred form, the biasing means 56 comprises a spring which normally urges the valve member 50 toward a closed position to effectively terminate communication of vapours from the tank 18.

The valve assembly 34 relieves pressure in the container 18 prior to a refilling sequence or process. To effect this end, an electrically energizable circuit means 58 (Figure 3) is provided which operates to control the solenoid actuator 52 and thereby operation of the valve means 48. The circuitry means 58 opens the valve means 48 to allow vapour escapement and pressure from the container or tank 18 only if certain vehicular conditions are satisfied. That is, the solenoid actuatable valve means 48 will only open if: a first operative means, defined by an operator actuated switch 60, is OFF; the liquid level in the chamber 22 of container 18 has attained a predetermined level; and the inlet port 24 is open. When such conditions are met, the electrical circuitry 58 including another operative means, defined in the presently preferred embodiment by a resettable timer 62, allows or permits the solenoid actuator 52 to be energized for a predetermined time period whereby moving the valve member 50 against the action of the spring 56 in a manner opening the valve assembly 34. The extent or period of time the passage 42 is open is modulatable. In the vehicular example illustrated, the switch means 60 may be defined by the automobile ignition switch having at least two operative positions and which is disposed between an energy source 64 and an electrical starter 66 for the engine 12.

Such that the valve assembly 34 may operate in the manner described, an operative means 68 is provided to monitor the liquid level in the chamber 22 of the container 18 and develop a signal indicative of the liquid attaining a predeterminable level. In the illustrated embodiment of Figure 2, the operative means 68 includes a fluid level sensor including a float means 70 having a magnet 72 carried thereby and a hall effect sensor 74. When the magnet 72 (representative of liquid level in the chamber 22) is displaced a predetermined distance from the sensor 74, the sensor 74 develops a signal indicative of the fuel level reaching or attaining a predetermined level. Another operative means 75 is provided to monitor whether the inlet port 24 to the chamber 22 is open. Such operative means may include a reed, hall effect sensor, or switch 76 arranged at the inlet port 24 to the chamber 22 to detect the state of a fill door, gas cap, etc. An attitude sensor means 78 may also be provided to influence the operation of the solenoid actuator 52 should the vehicle be rolled over. In its preferred form, the attitude sensor means 78 includes a spherical element 80 positioned approximate float 70 on a ramp 82 provided in the housing 38. The spherical element or ball 80 is freely movable and responds to attitude changes of the fuel tank to move the float 70 with its magnet 72 relative to the sensor 74.

Figure 4 schematically illustrates alternative electrically energizable circuitry 84 for operating the valve assembly 34. As illustrated in Figure 4, the second electrically energizable circuitry 84 is arranged in parallel with the described circuitry in Figure 3. Like the circuitry 58 illustrated and described in Figure 3, the second circuitry is responsive to the state of the switch means 60 and to the liquid level in the chamber 22 and further includes a resettable timer 86. In this alternative embodiment, if the switch 60 is OFF and the liquid in the chamber 22 of container 18 has attained a predetermined level, the timer 86 associated with the circuitry 84 controls the solenoid actuator 52 to open the valve means 48. The timer associated with the circuitry 84 allows the valve means 48 to be open for a different period of time than the timer 62 associated with the other circuitry 58.

With either embodiment, the solenoid actuator 52 and the valve member 50 cooperate to control the vapours flowing from container 18. As will be understood, the solenoid actuator 52 is operable to move an armature, in this embodiment the stem 54, in response to the creation of an electromagnetic field which is created or imposed as a result of closing or completion of either circuitry 58 or 84. As discussed above, the circuitry 58 will be closed or completed for a predetermined period of time only when: the operator controlled switch 60 is OFF; the liquid level in the chamber 22 of container 18 has attained a predetermined level determined by the operative means discussed above; and the inlet port 24 to the chamber 22 is opened as determined by the operative means described above. Similarly, the electrical engerizable circuit 84 may be closed or completed for a predetermined period of time only when: the operator controlled switch 60 is OFF; and the liquid level in the chamber 22 of the container 18 has attained a predetermined level as determined by the operative means described above. The purpose of the second circuit 84 is to relieve pressure in the tank prior to the operator removing the fuel cap. Whereas, the provision of either system will avoid fuel "spit back" or objectional noise when the inlet port is initially opened during a refilling or refueling process.

**Claims**

1. A valve apparatus for controlling the flow of vapor from a container (18) having a closable liquid inlet (24), the valve apparatus (34) comprising a housing (38) having a passage (42) one end (44) of which opens to a liquid receiving chamber (22) provided in the container (18) and another end (46) which opens to outside the container (18), solenoid actuatable valve means (48) situated in cooperative relationship to the passage (42) and effective to regulate vapour flow between the chamber (22) and outside of the container (18), and operative means (58,84) for controlling the opening and closing of the valve means (48) as a function of each of the following criteria: liquid level in the chamber (22) and whether an operator actuated switch (60) is open.

2. A valve apparatus as claimed in claim 1, wherein said another end of the housing (38) is connectable to a vapour absorbing canister (36).

3. A valve apparatus as claimed in claim 1 or claim 2, further including biasing means (56) for normally urging the valve means (48) toward a closed position to effectively terminate vapour flow between the chamber (22) and outside of the container (18).

4. A valve apparatus as claimed in any of the preceding claims, wherein means (68) are provided for monitoring the liquid level in the chamber (22), the monitoring means (68) being capable of developing a signal indicative of said liquid level.

5. A valve apparatus as claimed in claim 4, wherein the monitoring means (68) includes a buoyant float (70) for monitoring the liquid level in the chamber (22).

6. A valve apparatus as claimed in claim 5, wherein the buoyant float (70) moves toward and away from a sensor (74) capable of developing a signal indicative of the distance between the float (70) and the sensor (74).

7. A valve apparatus as claimed in claim 5 or claim 6, wherein the monitoring means (68) is further influenced by an attitude responsive means (78) arranged to move the float (70).

8. A valve apparatus as claimed in any of the preceding claims, wherein the operative means (58,84) controls the opening and closing of the valve means (48) as a fonction also of each of the following criteria; whether the liquid inlet (24) is open and the amount of time it has been open.

9. A valve apparatus as claimed in claim 8, wherein means (75) are provided for monitoring whether the liquid inlet (24) is open, the monitoring means (75) being capable of developing a signal indicative of whether the liquid inlet (24) is open.

10. A valve apparatus as claimed in claim 9, further including means (62) for measuring how long the liquid inlet (24) has been open and for changing state and delivering a signal after a predetermined time has lapsed following the opening of the liquid inlet (24).

11. A valve apparatus as claimed in claim 10, wherein the predetermined time length is modulatable.

12. A valve apparatus as claimed in claim 10 when appendant to claims 4 and 9, wherein the operative means (58,84) comprises electrically energizable circuit means (58) responsive to the operator actuated switch (60), the monitoring means (68), the monitoring means (75) and solenoid means (52) for actuating the valve means (48), whereby the circuit means (58) is completed and the solenoid means (52) is controlled to open the valve means (48) for a predetermined period of time extending from the opening of the liquid inlet (24) and after the switch (60) is moved by the operator to the open position and when the monitoring means (68) senses the liquid level in the chamber (22) has attained a predetermined level.

13. A valve apparatus as claimed in claim 12, wherein the extent of time the solenoid means (52) is controlled to open the valve means (48) is modulatable.

14. A valve apparatus as claimed in claim 12 or claim 13, wherein the monitoring means (75) is operably responsive to a closure member (26) for the liquid inlet (24).

15. A valve apparatus as claimed in any of claims 12 to 14, wherein the operative means (58,84) further including second electrically energizable circuit means (84) arranged in parallel to said first-mentioned electrically energizable circuit means (58), the second electrically energizable circuit means (84) being responsive to the switch (60) and to the signal from the monitoring means (68) for controlling the solenoid actuable valve means (48) such that the valve means (48) is opened for a predetermined period of time when the switch (60) is open and the monitoring means (68) signal indicates the liquid level in the chamber (22) has attained a predetermined level.

16. A valve apparatus as claimed in claim 15, wherein the second electrically energizable circuit means (84) opens the valve means (48) for a different period of time than the first electrically energizable circuit means (58).

17. A valve assembly as claimed in any of the preceding claims, wherein the container (18) is a fuel tank (18) on an automobile (10).

18. A valve assembly as claimed in any of the preceding claims, wherein the switch means (60) is an automobile switch (60).

**Patentansprüche**

1. Ventilvorrichtung zum Entlüften eines Behälters (18) mit einem verschließbaren Flüssigkeitseinlaß (24), mit einem Gehäuse (38), das einen Durchgang (42) aufweist, von dem ein Ende (44) in eine Flüssigkeitsauffangkammer (22) in den Behälter (18) mündet und ein anderes Ende (46) außerhalb des Behälters (18) mündet, mit einem Magnetventil (48), das zum Zusammenwirken mit dem Durchgang (42) angeordnet ist und die Entlüftung aus der Kammer (22) auf die Außenseite des Behälters (18) reguliert und Betätigungsmittel (58, 84) zum Öffnen und Schließen des Ventils (48) abhängig von folgenden Kriterien: Flüssigkeitspegel in der Kammer (22) unabhängig davon, ob ein willkürlich betätigter Schalter (60) geöffnet ist.

2. Ventilvorrichtung nach Anspruch 1, wobei das andere Ende des Gehäuses (38) mit einem Dämpfe absorbierenden Behälter (36) verbindbar ist.

3. Ventilvorrichtung nach Anspruch 1 oder 2, mit einer Vorspannung (56) zum Beaufschlagen des Ventils (48) in eine Schließlage, um die Entlüftung zwischen der Kammer (22) und der Außenseite des Behälters (18) zu unterbinden.

4. Ventilvorrichtung nach einem der vorhergehenden Ansprüche, wobei Mittel (68) vorgesehen sind, um den Flüssigkeitspegel in der Kammer (22) zu überwachen, und wobei die Überwachungsmittel (68) ein den Flüssigkeitspegel anzeigendes Signal erzeugen können.

5. Ventilvorrichtung nach Anspruch 4, wobei die Überwachungsmittel (68) einen Schwimmer (70) zum Überwachen des Flüssigkeitspegels in der Kammer (22) aufweisen.

6. Ventilvorrichtung nach Anspruch 5, wobei der Schwimmer (70) gegenüber einem Sensor (74) verschiebbar ist, der ein den Abstand zwischen dem Schwimmer (70) und dem Sensor (74) anzeigendes Signal erzeugen kann.

7. Ventilvorrichtung nach Anspruch 5 oder 6, wobei die Überwachungsmittel (68) ferner abhängig von höhenabhängigen Mitteln (78) sind, mit denen der Schwimmer (70) bewegbar ist.

8. Ventilvorrichtung nach einem der vorhergehenden Ansprüche, wobei die Betätigungsmittel (58, 84) das Öffnen und Schließen des Ventils (48) abhängig von jeweils folgenden Kriterien steuert: ob der Flüssigkeitseinlaß (24) offen ist und die Zeitdauer, in der sie offen war.

9. Ventilvorrichtung nach Anspruch 8, wobei Mittel (75) vorgesehen sind, die überwachen, ob der Flüssigkeitseinlaß (24) offen ist und wobei die Überwachungsmittel (75) ein Signal erzeugen können, das anzeigt, ob der Flüssigkeitseinlaß (24) offen ist.

10. Ventilvorrichtung nach Anspruch 9, mit Mitteln (72) zum Messen, wie lange der Flüssigkeitseinlaß (24) offen war und zur Zustandsänderung und Abgabe eines Signals nach einer vorbestimmten Zeit nach Öffnen des Flüssigkeitseinlasses (24).

11. Ventilvorrichtung nach Anspruch 10, wobei die vorbestimmte Zeitdauer veränderbar ist.

12. Ventilvorrichtung nach Ansprüchen 10, 4 und 9, wobei die Betätigungsmittel (58, 84) eine elektrisch aktivierbare Schaltung (58) aufweisen, die auf den willkürlich betätigten Schalter (60) anspricht, sowie die Überwachungsmittel (68), die Überwachungsmittel (75) und den Magneten (52) zum Betätigen des Ventils (48), so daß die Schaltung (58) vollständig ist und der Magnet (52) das Ventil (48) während einer vorbestimmten Zeitdauer öffnet, die mit dem Öffnen des Flüssigkeitseinlasses (74) beginnt und nachdem der Schalter (60) willkürlich in der Offenstellung betätigt ist und wenn die Überwachungsmittel (68) messen, daß der Flüssigkeitspegel in der Kammer (22) einen vorbestimmten Pegel erreicht hat.

13. Ventilvorrichtung nach Anspruch 12, wobei die Zeitdauer für den Magneten (52) zum Öffnen des Ventils (48) veränderbar ist.

14. Ventilvorrichtung nach Anspruch 12 oder 13, wobei die Überwachungsmittel (75) abhängig von einem Schließglied (26) für den Flüssigkeitseinlaß (24) wirksam sind.

15. Ventilvorrichtung nach einem der Ansprüche 12 bis 14, wobei die Betätigungsmittel (58, 84) eine zweite elektrisch aktivierbare Schaltung (84) aufweisen, die zu der ersten elektrisch aktivierbaren Schaltung (58) parallel geschaltet ist und von dem Schalter (60) und dem Signal der Überwachungsmittel (68) zum Steuern des Magnetventils (48) derart abhängig ist, daß das Ventil (48) für eine vorbestimmte Zeitdauer geöffnet ist, wenn der Schalter (60) offen ist und das Signal der Überwachungsmittel (68) anzeigt, daß der Flüssigkeitspegel in der Kammer (22) einen vorbestimmten Pegel erreicht hat.

16. Ventilvorrichtung nach Anspruch 15, wobei die zweite elektrisch aktivierbare Schaltung (84) das Ventil (48) für eine Zeitdauer öffnet, die anders ist als die der ersten elektrisch aktivierbaren Schaltung (58).

17. Ventilanordnung nach einem der vorhergehenden Ansprüche, wobei der Behälter (18) ein Brennkraftstofftank (18) eines Fahrzeuges (10) ist.

18. Ventilanordnung nach einem der vorhergehenden Ansprüche, wobei der Schalter (60) ein Fahrzeugschalter (60) ist.

**Revendications**

1. Dispositif de soupape pour commander l'écoulement des vapeurs provenant d'un réservoir (18) ayant une entrée de liquide que l'on peut fermer (24), le dispositif de soupape (34) comprenant un carter (38) ayant un passage (42) dont une extrémité (44) s'ouvre vers une chambre de réception de liquide (22) prévue dans le réservoir (18) et une autre extrémité (48) qui s'ouvre vers l'extérieur du réservoir (18), un moyen de soupape actionnable par électro-aimant (48) situé en relation de coopération avec le passage (42) et efficace pour réguler l'écoulement des vapeurs entre la chambre (22) et l'extérieur du réservoir (18) et des moyens de commande (58, 84) pour commander l'ouverture et la fermeture du moyen de soupape (48) comme une fonction de chacun des critères suivants : le niveau de liquide dans la chambre (22) et si un interrupteur actionné par l'opérataur (61) est ouvert.

2. Dispositif de soupape selon la revendication 1, dans lequel l'autre extrémité du carter (38) est raccordable à une boîte métallique d'absorption des vapeurs (36).

3. Dispositif de soupape selon la revendication 1 ou la revendication 2, comportant de plus un moyen de sollicitation (56) pour pousser normalement le moyen de soupape (48) vers une position fermée pour arrêter effectivement l'écoulement des vapeurs entre la chambre (22) et l'extérieur du réservoir (18).

4. Dispositif de soupape selon l'une quelconque des revendications précédentes, dans lequel des moyens (68) sont prévus pour surveiller le niveau de liquide dans la chambre (22), les moyens de surveillance (68) étant capable de développer un signal indicatif du niveau du liquide.

5. Dispositif de soupape selon la revendication 4, dans lequel le moyen de surveillance (68) comporte un flotteur (71) pour surveiller le niveau de liquide dans la chambre (22).

6. Dispositif de soupape selon la revendication 5, dans lequel le flotteur (70) se déplace vers et loin d'un capteur (74) pouvant développer un signal indicatif de la distance entre la flotteur (70) et le capteur (74).

7. Dispositif de soupape selon la revendication 5 ou la revendication 6, dans lequel le moyen de surveillance (68) est de plus influencé par un moyen sensible à l'attitude (68) disposé pour déplacer le flotteur (70).

8. Dispositif de soupape selon l'une quelconque des revendications précédentes, dans lequel le moyen de commande (58, 84) commande l'ouverture et la fermeture du moyen de soupape (48) comme une fonction de chacun des critères suivants : si l'entrée du liquide (24) est ouverte et le temps depuis lequel elle est ouverte.

9. Dispositif de soupape selon la revendication 8 dans lequel des moyens (75) sont prévus pour surveiller si l'entrée du liquide (24) est ouverte, le moyen de surveillance (75) étant capable de développer un signal indicatif du fait que l'entrée du liquide (24) est ouverte.

10. Dispositif de soupape salon la revendication 9, comportant de plus des moyens (62) pour mesurer depuis quand l'entrée du liquide (24) a été ouverte et pour changer l'état et délivrer un signal après qu'un temps prédéterminé se soit écoulé suivant l'ouverture de l'entrée du liquide (24).

11. Dispositif de soupape selon la revendication 10, dans lequel l'intervalle de temps prédéterminé peut être modulé.

12. Dispositif de soupape selon la revendication 10, lorsqu'annexé aux revendications 4 et 9, dans lequel le moyen de commande (58, 84) comprend un moyen de circuit alimentable électriquement (58) sensible à l'interrupteur actionné par opérateur (60), le moyen de surveillance (68), les moyens de surveillance (75) et le moyen d'électro-aimant (52) pour actionner le moyen de commande (48), si bien que le moyen de circuit (58) est établi et la moyen d'électro-aimant (52) est commandé pour ouvrir le moyen de soupape (48) pendant l'intervalle de temps prédéterminé commençant à l'ouverture de l'entrée du liquide (24) et après que l'interrupteur (60) soit déplacé par l'opérateur à la position ouverte et lorsque le moyen de surveillance (68) détecte que le niveau du liquide dans la chambre (22) a atteint un niveau prédéterminé.

13. Dispositif de soupape selon la revendication 12, dans lequel la durée pendant laquelle le moyen d'électro-aimant (52) est commandé pour ouvrir le moyen de soupape (44) peut être modulé.

14. Dispositif de soupape selon la revendication 12 ou la revendication 13, dans lequel le moyen de surveillance (75) est sensible fonctionnellement à un élément de fermeture (28) destiné à l'entrée du liquide (24).

15. Dispositif de soupape selon l'une quelconque des revendications 12 à 14, dans lequel la moyen de commande (58, 44) comprend de plus des seconds moyens de circuit alimentables électriquement (84) disposés en parallèle aux moyens de circuit alimentable électriquement mentionné en premier (58), les seconds moyens de circuit alimentables électriquement (84) étant sensibles à l'interrupteur (60) et au signal provenant du moyen de surveillance (68) pour commander le moyen de soupape actionnable par électro-aimant (48) d'une manière telle que le moyen de soupape (48) est ouvert pendant un intervalle de temps prédéterminé lorsque l'interrupteur (60) est ouvert et que le signal (68) du moyen de surveillance indique que le niveau du liquide dans la chambre (22) a atteint un niveau prédéterminé.

16. Dispositif de soupape selon la revendication 15, dans lequel les seconds moyens de circuit alimentables électriquement (84) ouvrent le moyen de soupape (48) pendant un intervalle de temps différent que les premiers moyens de circuits alimentables électriquement (58).

17. Ensemble de soupapes selon l'une quelconque des revendications précédentes, dans lequel le réservoir (18) est un réservoir d'essence (18) sur une automobile (10).

18. Dispositif de soupape selon l'une quelconque des revendications précédentes, dans lequel le moyen d'interrupteur (60) est un contacteur d'allumage d'automobile (60).

_FIG_1_

_FIG_3_

FUEL LEVEL SENSOR

FILL DOOR SENSOR

TIMER

SOLENOID

_FIG_4_

TIMER

FUEL LEVEL SENSOR

FILL DOOR SENSOR

TIMER

SOLENOID

FUEL VAPOR
RECOVERY
SYSTEM

FIg. 2.